# EUROPEAN PATENT APPLICATION

(11) **EP 3 513 686 A1**
(43) Date of publication of application: **24.07.2019**
(21) Application number: 18000131.5
(22) Date of filing: 12.02.2018
(51) Int. Cl.: A47C 27/08, A61G 7/057, F16K 11/22, F16K 24/00

(54) **AIR VALVE ASSEMBLY**

(30) Priority: 17.01.2018 CN 201820077128 U
(71) Applicant: Bestway Inflatables & Material Corp., Shanghai 201812 (CN)
(72) Inventor: HUANG, Shuiyong, Shanghai, 201812 (CN); QIU, Wanbin, Shanghai, 201812 (CN); CHEN, Yalan, Shanghai, 201812 (CN); ZHAO, Qiao, Shanghai, 201812 (CN)
(74) Representative: Müller-Boré & Partner Patentanwälte PartG mbB

(57) **Abstract**

An air valve assembly includes an inner piece having a support portion, a i inner piece plug, a first inner piece opening and a second inner piece opening, an outer piece having a flexible conical section configured to be collapsible from a first position to a second position, a first outer piece plug, a second outer piece plug, and an outer piece opening, the inner and outer pieces being peripherally coupled, wherein when the flexible conical section is in the second position, the inner piece plug is positioned to be received by and obstruct the outer piece opening. The air valve assembly according to the present disclosure can inflate and deflate the two independent chambers at the same time, is easily operated and can prevent air in the chambers from leaking.

## Description

### CROSS-REFERENCE TO RELATED APPLICATIONS

This application claims the priority of Chinese Patent Application No. 201820077128.1, filed January 17, 2018, which is incorporated herein by reference in its entirety.

### TECHNICAL FIELD

The present disclosure generally relates to an air valve assembly. In particular, an air valve assembly for inflating and deflating multiple fluid chambers is provided.

### BACKGROUND OF THE INVENTION

Standard valve structures are generally known in the art. Inflatable products (such as inflatable mattress, inflatable sofa and inflatable toys) are generally provided with air valves to inflate and deflate the chambers therein. For inflatable products with two or more independent chambers, the same number of air valves has to be provided to inflate and deflate different chambers. However, such an arrangement can be complicated and increase leakage risks and manufacturing costs.

Some valve systems include selectively-sealable openings or one-way valves. Conventional valve systems generally facilitate fluid flow across a fluid barrier to add or remove fluid from a fluid chamber. However, such conventional valves do not allow the simultaneous inflation or deflation of multiple fluid chambers with a single valve operation, or a single user manipulation. Accordingly, conventional valve systems are limited in their functionality and flexibility, and do not purposefully and effectively address these constraints.

### SUMMARY OF THE INVENTION

The present disclosure seeks to overcome some limitations and other drawbacks of the prior art, and to provide new features not heretofore available.

In some implementations of the present disclosure, an air valve assembly is provided. The air valve assembly includes an inner piece having a support portion, a inner piece plug, a first inner piece opening and a second inner piece opening, and an outer piece having a flexible conical section configured to be collapsible from a first position to a second position. The air valve assembly also includes a first outer piece plug, a second outer piece plug, and an outer piece opening, and a periphery of the inner piece can be coupled proximate a periphery of the outer piece. When the flexible conical section is in the second position, the inner piece plug can be positioned to be received by and obstruct the outer piece opening, the first outer piece plug can be positioned to be received by and obstruct the first inner piece opening, and the second outer piece plug can be positioned to be received and obstruct the second inner piece opening.

The inner piece plug can be disposed between the first and second inner piece openings, and the outer piece opening can be disposed between the first and second outer piece plugs.

The outer piece can further comprise first and second handles coupled to an outer surface of the outer piece.

The first handle can be disposed at a position aligned with the first outer piece plug and the second handle can be disposed at a position aligned with the second outer piece plug.

The outer piece can further comprise an outer piece opening flange extending from the outer piece opening of the outer piece towards the inner piece, wherein when the flexible conical section is in the second position, the inner piece plug can be positioned to be received by the opening flange and obstruct the outer piece opening.

The inner piece can further comprise a first inner piece opening flange extending from the first inner piece opening of the inner piece towards the outer piece, wherein when the flexible conical section is in the second position, the first outer piece plug can be positioned to be received by the first inner piece opening flange and obstruct the first inner piece opening.

The outer piece further can comprise a first outer piece plug flange that surrounds the first outer piece plug at its outside and extends towards the inner piece, wherein when the flexible conical section is in the second position, the first inner piece opening flange can be disposed between the first outer piece plug and the first outer piece plug flange to secure a seal of the first outer piece plug in the first inner piece opening.

The inner piece can further comprise a second inner piece opening inner flange that extends from the second inner piece opening of the inner piece towards the outer piece, wherein when the flexible conical section is in the second position, the second outer piece plug can be positioned to be received by second inner piece opening inner flange and obstruct the second inner piece opening.

The outer piece can further comprise a second outer piece plug flange that surrounds the second outer piece plug at its outside and extends towards the inner piece, wherein when the flexible conical section is in the second position, the second inner piece opening inner flange can be disposed between the second outer piece plug and the second outer piece plug flange to secure a seal of the second outer piece plug in the second inner piece opening.

The inner piece can further comprise a second inner piece opening outer flange that extends from the second inner piece opening in a direction opposite from a direction in which the second inner piece opening inner flange extends.

The inner piece can further comprise a first connection portion disposed around a periphery of the support portion, the outer piece further can comprise a second connection portion disposed around a periphery of the flexible conical section, wherein the first connection portion can be coupled to the second connection portion.

The outer piece, the first connection portion and the second connection portion can be comprised of at least one flexible thermoplastic material, wherein the inner piece can be comprised of at least one rigid material, and wherein the first connection portion can be coupled to the second connection portion by one of high frequency welding and adhesion.

The inner piece can comprise a third connection portion disposed around a periphery of the second inner piece opening outer flange.

In some aspects, the present disclosure provides an inflatable product. The inflatable product includes a first air chamber, a second air chamber, an air valve assembly for inflation and deflation for the first air chamber and the second air chamber. The air valve assembly includes an inner piece having a support portion, an inner piece plug, a first inner piece opening, and a second inner piece opening, wherein the first inner piece opening is in fluid communication with the first air chamber, and the second inner piece opening is in fluid communication with the second air chamber. An outer piece having a flexible conical section can be configured to be collapsible from a first position to a second position. The inflatable product can include a first outer piece plug, a second outer piece plug, and an outer piece opening, the outer piece opening can be in fluid communication with an outer space of the inflatable product, and a periphery of the inner piece can be coupled proximate a periphery of the outer piece. When the flexible conical section is in the second position, the inner piece plug can be positioned to be received by and obstruct the outer piece opening, the first outer piece plug can be positioned to be received by and obstruct the first inner piece opening and the second outer piece plug can be positioned to be received by and obstruct the second inner piece opening. When the flexible conical section is in the first position, the inner piece plug can be released from the outer piece opening, the first outer piece plug can be released from the first inner piece opening and the second outer piece plug can be released from the second inner piece opening such that the first and second air chambers are in fluid communication with an outer space of the inflatable product.

The inner piece plug can be disposed between the first and second inner piece openings, and wherein the outer piece opening can be disposed between the first and second outer piece plugs.

The outer piece can further comprise first and second handles coupled to an outer surface of the outer piece, wherein the first handle is disposed at a position aligned with the first outer piece plug and the second handle is disposed at a position aligned with the second outer piece plug.

The outer piece can further comprise an outer piece opening flange that extends from the outer piece opening of the outer piece towards the inner piece, the inner piece can further comprise a first inner piece opening flange and a second inner piece opening inner flange that respectively extend from the first and second inner piece openings of the inner piece towards the outer piece, wherein when the flexible conical section is in the second position, the inner piece plug can be positioned to be received by the outer piece opening flange and obstruct the outer piece opening, the first outer piece plug can be positioned to be received by the first inner piece opening flange and obstruct the first inner piece opening, and the second outer piece plug can be positioned to be received by the second inner piece opening inner flange and obstruct the second inner piece opening.

The outer piece can further comprise a first outer piece plug flange that surrounds the first outer piece plug at its outside and extends towards the inner piece, wherein when the flexible conical section is in the second position, the first inner piece opening flange can be disposed between the first outer piece plug and the first outer piece plug flange to secure a seal of the first outer piece plug in the first inner piece opening.

The outer piece can further comprise a second outer piece plug flange that surrounds the second outer piece plug at its outside and extends towards the inner piece, wherein when the flexible conical section is in the second position, the second inner piece opening inner flange can be disposed between the second outer piece plug and the second outer piece plug flange to secure a seal of the second outer piece plug in the second inner piece opening.

The inner piece can further comprise a first connection portion around a periphery of the support portion, the outer piece can further comprise a second connection portion around a periphery of the flexible conical section, wherein the first connection portion can be coupled to the second connection portion, and one of the first and second connection portions can be coupled to a first wall of the first air chamber.

The inner piece can further comprise a second inner piece opening outer flange that extends from the second inner piece opening in a direction opposite from extension of the second inner piece opening inner flange, and a third connection portion around a periphery of the second inner piece opening outer flange, and the third connection portion can be coupled to a second wall of the second air chamber.

The outer piece and the first, second and third connection portions can be comprised of at least one flexible thermoplastic material, wherein the inner piece is comprised of at least one rigid material, and wherein one of the first and second connection portions is coupled to the first wall of the first air chamber by one of high frequency welding and adhesion, and the third connection portion is coupled to the second wall of the second air chamber by one of high frequency welding and adhesion.

The air valve assembly according to the present disclosure can inflate and deflate the chambers with high efficiency at the same time, and its operation is simple and its cost is low. Further, leakage from the chambers can be avoided, or reduced, by a double seal.

### BRIEF DESCRIPTION OF THE DRAWINGS

To understand the present disclosure, it will now be described by way of example, with reference to the accompanying drawings in which implementations of the disclosures are illustrated and, together with the descriptions below, serve to explain the principles of the disclosure.

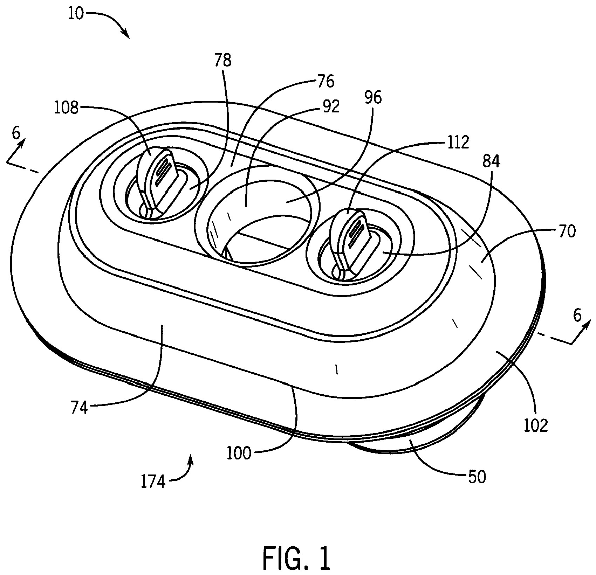

FIG. 1 is an upper perspective view of an air valve assembly in a first position according to exemplary implementations of the present disclosure.

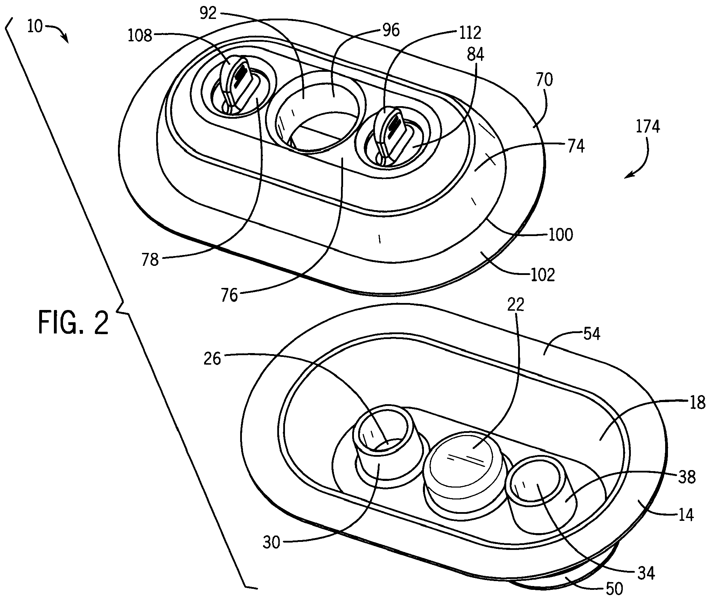

FIG. 2 is an exploded upper perspective view of the air valve assembly of FIG. 1.

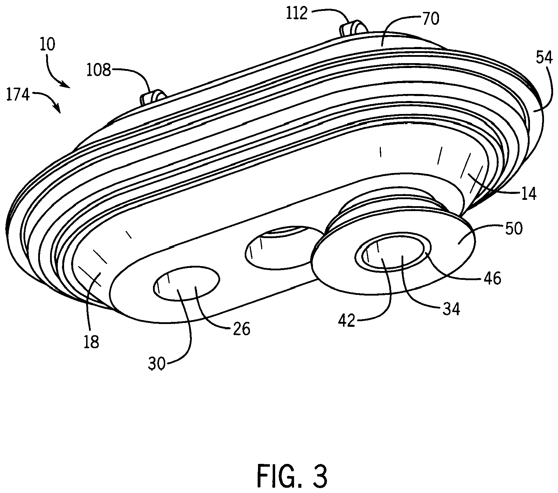

FIG. 3 is a lower perspective view of the air valve assembly of FIG. 1.

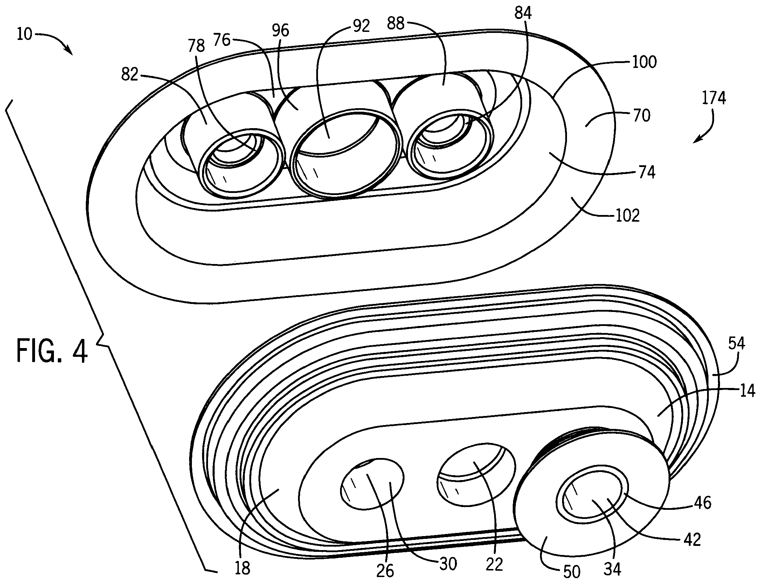

FIG. 4 is an exploded lower perspective view of the air valve assembly of FIG. 1.

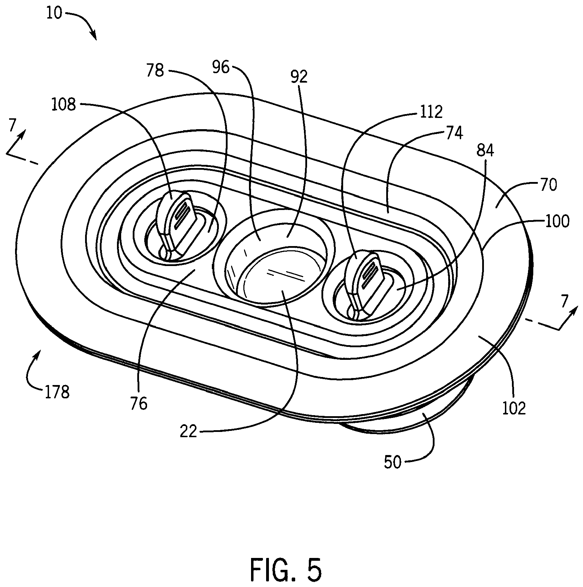

FIG. 5 is an upper perspective view of the air valve assembly of FIG. 1, showing the air valve assembly in a second position.
FIG. 6 is a cross-sectional view of the air valve assembly of FIG. 1, taken along line 6-6, showing the air valve assembly in the first position.
FIG. 7 is a cross-sectional view of the air valve assembly of FIG. 5, taken along line 7-7 of FIG. 5, showing the air valve assembly in the second position.

### DETAILED DESCRIPTION

While the air valve assembly discussed herein may be implemented in many different forms, the disclosure will show in the drawings, and will herein describe in detail, implementations with the understanding that the present description is to be considered as an exemplification of the principles of the air valve assembly and is not intended to limit the broad aspects of the disclosure to the implementations illustrated.

An air valve assembly 10 is disclosed. Referring now to the figures, the air valve assembly 10 includes an inner element 14, or an inner piece, including a support portion 18. The inner element 14 further includes inner piece plug 22, a first inner piece opening 26 and a first inner piece opening flange 30. The first inner piece opening flange 30 extends from the first inner piece opening 26 towards an outer element 70, or outer piece, when the outer element 70 is joined with the inner element 14, as will be described below in further detail.

The inner element 14 also defines a second inner piece opening 34, and includes a second inner piece opening inner flange 38 and a second inner piece opening outer flange 42. The second inner piece opening inner flange 38 extends from the second inner piece opening 34 towards the outer element 70 when the outer element 70 is joined with the inner element 14. The second inner piece opening outer flange 42 extends from the second inner piece opening 34 away from the outer element 70 when the outer element 70 is joined with the inner element 14. In some implementations, the second inner piece opening inner flange 38 and the second inner piece opening outer flange 42 each extend from the second inner piece opening 34, or from the inner element 14, in substantially opposite directions.

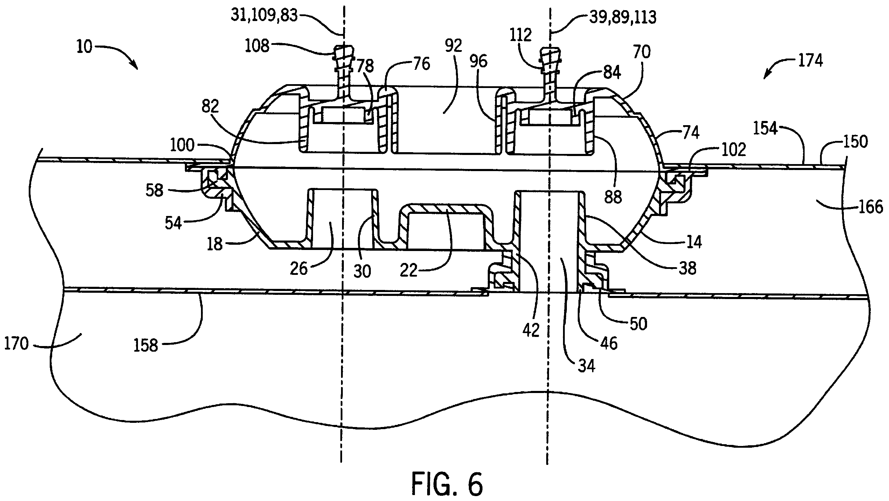

The second inner piece opening outer flange 42 defines a peripheral portion 46 of the second inner piece opening outer flange. A third connection portion 50 is disposed at, on, around or near the peripheral portion 46 of the second inner piece opening outer flange. The third connection portion 50 connects the second inner piece opening outer flange 42 to a second wall. A first connection portion 54, as exemplarily shown in FIG. 6, is disposed on, around, near or at an inner piece periphery 58, and connects the support portion 18, or the inner element 14, to a second connection portion, which will be described below in further detail.

The outer element 70, or outer piece, includes a flexible portion 74 and an outer portion 76. The flexible portion 74 can be substantially conical or frusto-conical in shape, and can be disposed substantially between the outer portion 76 and the inner element 14 when the inner element 14 is joined to the outer element 70, as will be described below in further detail. A first handle 108 and a second handle 112 can be disposed on the outer element 70 or on the outer portion 76.

The outer element 70 can include a first outer piece plug 78 and a first outer piece plug flange 82. The first outer piece plug flange 82, in some implementations, extends from the outer portion 76 towards the inner element 14 when the inner element 14 is joined to the outer element 70.

The outer element 70 can also include a second outer piece plug 84 and a second outer piece plug flange 88. The second outer piece plug flange 88, in some implementations, extends from the outer portion 76 towards the inner element 14 when the inner element 14 is joined to the outer element 70.

The outer element 70 can further define an outer piece opening 92 and an outer piece opening flange 96. The outer piece opening flange 96, in some implementations, extends from the outer portion 76, or the outer piece opening 92, towards the inner element 14 when the inner element 14 is joined to the outer element 70.

A second connection portion 102 is disposed on, at, proximate and/or around an outer piece periphery 100, as can be exemplarily seen in FIG. 6. In some implementations, when the inner element 14 is joined to the outer element 70, the second connection portion 102 is joined to the first connection portion 54.

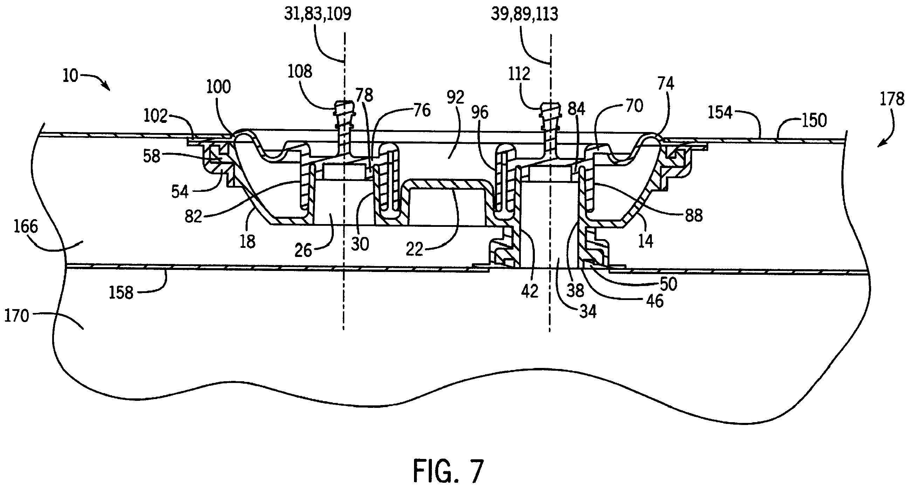

Further, the second connection portion 102 is, in some implementations, joined to an inflatable article 150, as best shown in FIGS. 6 and 7. The inflatable article 150 includes a first wall 154 and a second wall 158, and each wall 154,158 at least partially defines a fluid chamber. In particular, the inflatable article 150 includes a first fluid chamber 166 and a second fluid chamber 170. In some implementations, the second connection portion 102 is disposed substantially between the first connection portion 54 and the first wall 154. The second connection portion 102 can be joined to both of the first connection portion 54 and the first wall 154 and, in some implementations, the first connection portion 54 and the first wall 154 can each be joined to the second connection portion 102 on opposed surfaces of the second connection portion 102. Similarly, as mentioned above, the third connection portion 50 is disposed at, on, around or near the peripheral portion 46 of the second inner piece opening outer flange 42, and the third connection portion 50 connects the second inner piece opening outer flange 42 to the second wall 158, as best illustrated in FIGS. 6 and 7.

The flexible portion 74 is disposed substantially between the outer portion 76 and the inner element 14 when the inner element 14 is joined to the outer element 70. The flexible portion 74 selectively transforms, configures or deforms between multiple positions, each of which include the flexible portion 74 assuming a different physical shape from that of other positions. In particular, the flexible portion 74 is selectively positionable in a first position 174, as best shown in FIG. 6, and a second position 178, as best shown in FIG. 7. As the inner element 14 is joined with the outer element 70 to form the air valve assembly 10, the flexible portion 74 being selectively positioned in the first position 174 corresponds with the air valve assembly 10 being open and the flexible portion 74 being selectively positioned in the second position 178 corresponds with the air valve assembly 10 being closed.

In operation, a user can manipulate one or more of the first handle 108 and the second handle 112 to selectively configure the outer element 70, from the first position 174 to the second position 178, and from the second position 178 to the first position 174. In some implementations, the first handle 108 is disposed adjacent, proximate, aligned with or above the first outer piece plug 78 and the second handle 112 is disposed adjacent, proximate, aligned with or above the second outer piece plug 84. In some implementations, a first handle longitudinal axis 109 is coincident with a first outer piece plug flange bore axis 83, and/or with a first inner piece opening flange bore axis 31. In some implementations, a second handle longitudinal axis 113 is coincident with a second outer piece plug flange bore axis 89, and/or with a second inner piece opening inner flange bore axis 39.

In the first position 174, the first fluid chamber 166, the second fluid chamber 170 and an exterior 162 of the inflatable article 150 are in fluid communication. In other words, fluid is able to freely pass between the first fluid chamber 166 and the second fluid chamber 170, between the first fluid chamber 166 and the exterior 162 and between the second fluid chamber 170 and the exterior 162. Fluid can freely pass through the first inner piece opening 26, first inner piece opening flange 30, second inner piece opening 34, second inner piece opening inner flange 38, second inner piece opening outer flange 42, outer piece opening 92 and outer piece opening flange 96 to fluidly connect each of the first fluid chamber 166, second fluid chamber 170 and exterior 162.

In the second position 178, the first fluid chamber 166, the second fluid chamber 170 and an exterior 162 of the inflatable article 150 are not in fluid communication. In other words, fluid is unable to pass between the first fluid chamber 166 and the second fluid chamber 170, between the first fluid chamber 166 and the exterior 162 and between the second fluid chamber 170 and the exterior 162.

In particular, in the second position 178, the first inner piece opening flange 30 engages with, and inserts between, the first outer piece plug flange 82 and the first outer piece plug 78 to form a fluid-tight, or a substantially fluid-tight, seal between the first inner piece opening flange 30 and the first outer piece plug 78 and/or the first outer piece plug flange 82, and thereby obstruct the first inner piece opening 26. In some implementations, an interference fit may be formed between one or more of, the first outer piece plug flange 82 and first outer piece plug 78 and the first inner piece opening flange 30 to form the fluid-tight, or substantially fluid-tight, seal between the first inner piece opening flange 30 and the first outer piece plug 78 and/or the first outer piece plug flange 82. Other mechanical attachment mechanisms, such as biased members, clips, clasps, adhesives or snaps, among others, can be used to releasably connect one or more of the first inner piece opening flange 30, first outer piece plug flange 82 and first outer piece plug 78 to form the fluid-tight, or substantially fluid-tight, seal between the first inner piece opening flange 30 and the first outer piece plug 78 and /or the first outer piece plug flange 82.

Also, in the second position 178, the second inner piece opening inner flange 38 engages with, and inserts between, the second outer piece plug 84 and the second outer piece plug flange 88 to form a fluid-tight, or substantially fluid-tight, seal between the second inner piece opening inner flange 38 and the second outer piece plug 84 and /or the second outer piece plug flange 88, and thereby obstruct the second inner piece opening 34. In some implementations, an interference fit may be formed between one or more of the second outer piece plug 84 and the second outer piece plug flange 88 and the second inner piece opening inner flange 38 to form the fluid-tight, or substantially fluid-tight, seal between the second inner piece opening inner flange 38 and the second outer piece plug 84 and/or the second outer piece plug flange 88. Other mechanical attachment mechanisms, such as biased members, clips, clasps, adhesives or snaps, among others, can be used to releasably connect one or more of the second inner piece opening inner flange 38, second outer piece plug flange 88 and second outer piece plug 84 to form the fluid-tight, or substantially fluid-tight, seal between the second inner piece opening inner flange 38 and the second outer piece plug 84 and/or the second outer piece plug flange 88.

Further, in the second position 178, the outer piece opening flange 96 engages with the inner piece plug 22 to form a fluid-tight, or substantially fluid-tight, seal between the outer piece opening flange 96 and the inner piece plug 22 and thereby obstruct the outer piece opening 92. In some implementations, an interference fit may be formed between the outer piece opening flange 96 and the inner piece plug 22 to form the fluid-tight, or substantially fluid-tight, seal between the outer piece opening flange 96 and the inner piece plug 22. Other mechanical attachment mechanisms, such as biased members, clips, clasps, adhesives or snaps, among others, can be used to releasably connect the outer piece opening flange 96 and inner piece plug 22 to form the fluid-tight, or substantially fluid-tight, seal between the outer piece opening flange 96 and the inner piece plug 22.

One or more of the outer element 70, first connection portion 54 and second connection portion 102 can be comprised of at least one flexible thermoplastic material, and the inner element 14 can be comprised of at least one rigid material. The first connection portion 54 can be coupled to the second connection portion 102 by one or more of high frequency welding, adhesion and any other mechanical attachment system commonly known to those skilled in the art. Additionally, it is to be understood that all described elements and features in this disclosure can be formed of any number of materials including, but not limited to, polymers, rubbers, foams, metals or any other suitable material known to those skilled in the art. In particular, any portion or element of the air valve assembly 10 may be formed of polyvinyl chloride (PVC), which may include a hardness of 70±5 Parts per Hundred Resin (PHR). The first connection portion 54 is, in some implementations, coupled to the inner piece periphery 58 by an encapsulation process, and the inner element 14 and the first connection portion 54 may be formed of ABS. In some implementations, the inner element may be formed integrally and may be formed of PVC with hardness of 30±5 PHR. Hardness in PHR represents a sum for the parts of each plasticizer in per hundred PVC resins divided by its plasticization efficiency. For example, if there are 30 parts of A with plasticization efficiency of 2, 20 parts of B with plasticization efficiency of 2 and 10 parts of C with plasticization efficiency of 1 in per hundred PVC resins, the hardness in PHR=30/2+20/2+10/1=35.

While some implementations have been illustrated and described, numerous modifications come to mind without significantly departing from the spirit of the disclosure, and the scope of protection is only limited by the scope of the accompanying claims.

The disclosed systems and methods are well adapted to attain the ends and advantages mentioned as well as those that are inherent therein. The particular implementations disclosed above are illustrative only, as the teachings of the present disclosure may be modified and practiced in different but equivalent manners apparent to those skilled in the art having the benefit of the teachings herein. Furthermore, no limitations are intended to the details of construction or design herein shown, other than as described in the claims below. It is therefore evident that the particular illustrative implementations disclosed above may be altered, combined, or modified and all such variations are considered within the scope of the present disclosure. The systems and methods illustratively disclosed herein may suitably be practiced in the absence of any element that is not specifically disclosed herein and/or any optional element disclosed herein. While compositions and methods are described in terms of "comprising," "containing," or "including" various components or steps, the compositions and methods can also "consist essentially of' or "consist of' the various components and steps. All numbers and ranges disclosed above may vary by some amount. Whenever a numerical range with a lower limit and an upper limit is disclosed, any number and any included range falling within the range is specifically disclosed. In particular, every range of values (of the form, "from about a to about b," or, equivalently, "from approximately a to b," or, equivalently, "from approximately a-b") disclosed herein is to be understood to set forth every number and range encompassed within the broader range of values. Also, the terms in the claims have their plain, ordinary meaning unless otherwise explicitly and clearly defined by the patentee. Moreover, the indefinite articles "a" or "an," as used in the claims, are defined herein to mean one or more than one of the element that it introduces. If there is any conflict in the usages of a word or term in this specification and one or more patent or other documents that may be incorporated herein by reference, the definitions that are consistent with this specification should be adopted.

As used herein, the phrase "at least one of' preceding a series of items, with the terms "and" or "or" to separate any of the items, modifies the list as a whole, rather than each article of the list (i.e., each item). The phrase "at least one of' allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

## Claims

1. An air valve assembly for use with an inflatable article, the air valve assembly comprising:
an inner piece having a support portion, a inner piece plug, a first inner piece opening and a second inner piece opening; and
an outer piece having a flexible conical section configured to be collapsible from a first position to a second position, a first outer piece plug, a second outer piece plug, and an outer piece opening, a periphery of the outer piece being coupled proximate a periphery of the inner piece;
wherein when the flexible conical section is in the second position, the inner piece plug is positioned to be received by and obstruct the outer piece opening, the first outer piece plug is positioned to be received by and obstruct the first inner piece opening, and the second outer piece plug is positioned to be received and obstruct the second inner piece opening.

2. The air valve assembly of Claim 1, wherein the inner piece plug is disposed between the first and second inner piece openings, and wherein the outer piece opening is disposed between the first and second outer piece plugs.

3. The air valve assembly of Claim 1, the outer piece further comprising first and second handles coupled to an outer surface of the outer piece£¬wherein the first handle is disposed at a position aligned with the first outer piece plug and the second handle is disposed at a position aligned with the second outer piece plug.

4. The air valve assembly of Claim 1, the outer piece further comprising an outer piece opening flange extending from the outer piece opening of the outer piece towards the inner piece, wherein when the flexible conical section is in the second position, the inner piece plug is positioned to be received by the opening flange and obstruct the outer piece opening.

5. The air valve assembly of Claim 1, the inner piece further comprising a first inner piece opening flange extending from the first inner piece opening of the inner piece towards the outer piece, wherein when the flexible conical section is in the second position, the first outer piece plug is positioned to be received by the first inner piece opening flange and obstruct the first inner piece opening, and the inner piece further comprising a second inner piece opening inner flange that extends from the second inner piece opening of the inner piece towards the outer piece, wherein when the flexible conical section is in the second position, the second outer piece plug is positioned to be received by second inner piece opening inner flange and obstruct the second inner piece opening.

6. The air valve assembly of Claim 5, the outer piece further comprising a first outer piece plug flange that surrounds the first outer piece plug at its outside and extends towards the inner piece, wherein when the flexible conical section is in the second position, the first inner piece opening flange is disposed between the first outer piece plug and the first outer piece plug flange to secure a seal of the first outer piece plug in the first inner piece opening, and the outer piece further comprising a second outer piece plug flange that surrounds the second outer piece plug at its outside and extends towards the inner piece, wherein when the flexible conical section is in the second position, the second inner piece opening inner flange is disposed between the second outer piece plug and the second outer piece plug flange to secure a seal of the second outer piece plug in the second inner piece opening.

7. The air valve assembly of Claim 1, wherein the inner piece further comprising a first connection portion disposed around a periphery of the support portion, the outer piece further comprises a second connection portion disposed around a periphery of the flexible conical section, wherein the first connection portion is coupled to the second connection portion.

8. The air valve assembly of Claim 6, the inner piece further comprising a second inner piece opening outer flange that extends from the second inner piece opening in a direction opposite from a direction in which the second inner piece opening inner flange extends, wherein the inner piece comprises a third connection portion disposed around a periphery of the second inner piece opening outer flange.

9. The air valve assembly of Claim 7, wherein the outer piece, the first connection portion and the second connection portion are comprised of at least one flexible thermoplastic material, wherein the inner piece is comprised of at least one rigid material, and wherein the first connection portion is coupled to the second connection portion by one of high frequency welding and adhesion.

10. An inflatable product, comprising:
a first air chamber;
a second air chamber;
an air valve assembly for inflation and deflation for the first air chamber and the second air chamber, the air valve assembly comprising:
an inner piece having a support portion, a inner piece plug, a first inner piece opening, and a second inner piece opening, wherein the first inner piece opening is in fluid communication with the first air chamber, and the second inner piece opening is in fluid communication with the second air chamber; and
an outer piece having a flexible conical section configured to be collapsible from a first position to a second position, a first outer piece plug, a second outer piece plug, and a outer piece opening, the outer piece opening being in fluid communication with an outer space of the inflatable product, a periphery of the inner piece being coupled proximate a periphery of the outer piece;
wherein when the flexible conical section is in the second position, the inner piece plug is positioned to be received by and obstruct the outer piece opening, the first outer piece plug is positioned to be received by and obstruct the first inner piece opening and the second outer piece plug is positioned to be received by and obstruct the second inner piece opening,
wherein when the flexible conical section is in the first position, the inner piece plug is released from the outer piece opening, the first outer piece plug is released from the first inner piece opening and the second outer piece plug is released from the second inner piece opening such that the first and second air chambers are in fluid communication with the outer space of the inflatable product.

11. The inflatable product of Claim 10, the outer piece further comprising first and second handles coupled to an outer surface of the outer piece, wherein the first handle is disposed at a position aligned with the first outer piece plug and the second handle is disposed at a position aligned with the second outer piece plug.

12. The inflatable product of Claim 10, the outer piece further comprising a outer piece opening flange that extends from the outer piece opening of the outer piece towards the inner piece, the inner piece further comprising a first inner piece opening flange and a second inner piece opening inner flange that respectively extend from the first and second inner piece openings of the inner piece towards the outer piece, wherein when the flexible conical section is in the second position, the inner piece plug is positioned to be received by the outer piece opening flange and obstruct the outer piece opening, the first outer piece plug is positioned to be received by the first inner piece opening flange and obstruct the first inner piece opening, and the second outer piece plug is positioned to be received by the second inner piece opening inner flange and obstruct the second inner piece opening.

13. The inflatable product of Claim 12, the outer piece further comprising a first outer piece plug flange that surrounds the first outer piece plug at its outside and extends towards the inner piece, wherein when the flexible conical section is in the second position, the first inner piece opening flange is disposed between the first outer piece plug and the first outer piece plug flange to secure a seal of the first outer piece plug in the first inner piece opening, and the outer piece further comprising a second outer piece plug flange that surrounds the second outer piece plug at its outside and extends towards the inner piece, wherein when the flexible conical section is in the second position, the second inner piece opening inner flange is disposed between the second outer piece plug and the second outer piece plug flange to secure a seal of the second outer piece plug in the second inner piece opening.

14. The inflatable product of Claim 12, the inner piece further comprising a first connection portion around a periphery of the support portion, the outer piece further comprising a second connection portion around a periphery of the flexible conical section, wherein the first connection portion is coupled to the second connection portion, and one of the first and second connection portions is coupled to a first wall of the first air chamber.

15. The inflatable product of Claim 14, the inner piece further comprising a second inner piece opening outer flange that extends from the second inner piece opening in a direction opposite from extension of the second inner piece opening inner flange, and a third connection portion around a periphery of the second inner piece opening outer flange, and the third connection portion is coupled to a second wall of the second air chamber.

16. The inflatable product of Claim 15, wherein the outer piece and the first, second and third connection portions are comprised of at least one flexible thermoplastic material, wherein the inner piece is comprised of at least one rigid material, and wherein one of the first and second connection portions is coupled to the first wall of the first air chamber by one of high frequency welding and adhesion, and the third connection portion is coupled to the second wall of the second air chamber by one of high frequency welding and adhesion.
